# EUROPÄISCHE PATENTSCHRIFT

(11) **EP 3 713 992 B1**
(45) Veröffentlichungstag und Bekanntmachung des Hinweises auf die Patenterteilung: **21.04.2021**
(21) Anmeldenummer: 18759931.1
(22) Anmeldetag: 24.08.2018
(51) Int. Cl.: C08G 77/04, C08G 77/06, C08G 77/08

(54) **VERFAHREN ZUR HERSTELLUNG VON VERZWEIGTEN ORGANOPOLYSILOXANEN**
PROCESS FOR PREPARING BRANCHED ORGANOPOLYSILOXANES
PROCÉDÉ DE PRODUCTION D'ORGANOPOLYSILOXANES RAMIFIÉS

(43) Veröffentlichungstag der Anmeldung: 30.09.2020
(73) Patentinhaber: Wacker Chemie AG, 81737 München (DE)
(72) Erfinder: PRASSE, Marko, 01612 Glaubitz (DE)
(74) Vertreter: Budczinski, Angelika
(86) Internationale Anmeldenummer: PCT/EP2018/072903
(87) Internationale Veröffentlichungsnummer: WO 2020/038588

(56) Entgegenhaltungen:
- DE-A1- 10 227 590

## Beschreibung

Die Erfindung betrifft ein Verfahren zur Herstellung von verzweigten Organopolysiloxanen, aus Alkoxysilanen und Polydiorganosiloxanen über zwei Stufen durch basische Equilibrierung und anschließender säurekatalysierter Umsetzung mit Wasser. Verfahren zur Herstellung von verzweigten Organopolysiloxanen sind seit langem Stand der Technik. In EP 0 850 998 B1 wird ein Siliconharz oder dessen hydrolysierbare Vorläufer mit linearen Siloxanen in einem einstufigen Prozess in Lösungsmittel umgesetzt. Als Katalysatoren werden unter anderen Kondensationskatalysatoren genannt, die, zwar weniger bevorzugt, auch starke Säuren oder Basen sein können.

EP 2 619 249 B1, EP 2 619 248 B1, EP 2 619 247 A1, EP 2 619 246 B1 und EP 2 619 245 B1 beschreiben die Herstellung von sogenannten DT-Harzen mit Block-Copolymer-Struktur aus endgekäppten linearen Organosiloxanen und Organosiloxanharzen in einem organischen Lösungsmittel. Das Blockcopolymer hat ein Gewichtsmittel von mindestens 20 000 g/mol.

Ebenso werden in EP 2 791 263 B1 DT-Harze hergestellt mit Block-Copolymer-Struktur aus endgekäppten linearen Organosiloxanen, Organosiloxanharzen und in einem organischen Lösungsmittel, wobei diese DT-Harze mit Hilfe starker organischer Basen ausgehärtet werden.

Das Dokument DE10227590 offenbart im Beispiel 1, Stufe a) ein Verfahren, dass dem vorliegenden Verfahren ähnlich ist. Keine Hydrolyse/Kondensation findet jedoch tatsächlich in der Zweiten Stufe statt.

Gegenstand der Erfindung ist ein Verfahren zur Herstellung von verzweigten Organopolysiloxanen, wobei
in einem ersten Schritt mindestens ein Alkoxysilan mit mindestens einem Polydiorganosiloxan in Gegenwart eines basischen Katalysators gegebenenfalls im Gemisch mit Alkohol equilibriert wird und
in einem zweiten Schritt das im ersten Schritt erhaltene Equilibrat mit Wasser und gegebenenfalls weiteren Organosiliciumverbindungen in Anwesenheit eines sauren Katalysators und gegebenenfalls Alkohol hydrolysiert und kondensiert wird,
mit der Maßgabe, dass im zweiten Schritt Kohlenwasserstoffe in Mengen von maximal 1 Gew.-%, bezogen auf die Menge des Equilibrats, anwesend sind.

Bei den Kohlenwasserstoffen, die bis maximal 1 Gew.-% im zweiten Verfahrensschritt anwesend sein können, handelt es sich bevorzugt um lineare oder verzweigte Kohlenwasserstoffe, die als Verunreinigungen in den eingesetzten Alkoxysilanen und/oder Polydiorganosiloxanen enthalten sein können.

Im Rahmen der vorliegenden Erfindung sollen von dem Begriff Organopolysiloxane sowohl polymere, oligomere wie auch dimere Siloxane mitumfasst werden.

Bevorzugt werden bei dem erfindungsgemäßen Verfahren verzweigte Organopolysiloxane enthaltend Einheiten der Formel

RₐSi(OR¹)_{b}O_{(4-a-b)/2} (I)

erhalten, wobei
R gleich oder verschieden sein kann und einen einwertigen oder zweiwertigen, SiC-gebundenen, gegebenenfalls substituierten Kohlenwasserstoffrest bedeutet,
R¹ gleich oder verschieden sein kann und Wasserstoffatom oder Kohlenwasserstoffreste mit 1 bis 4 Kohlenstoffatomen bedeutet, a 0, 1, 2 oder 3 ist und
b 0, 1, 2 oder 3 bedeutet, mit der Maßgabe, dass
die Summe a+b≤3 ist,
a in 20 bis 90%, vorzugsweise in 30 bis 90%, besonders bevorzugt in 40 bis 90%, aller Einheiten der Formel (I) den Wert 1 besitzt,
a in 10 bis 60% aller Einheiten der Formel (I) den Wert 2 besitzt,
a in höchstens 10%, vorzugsweise in höchstens 8%, besonders bevorzugt in höchstens 6%, aller Einheiten der Formel (I) den Wert 3 besitzt,
a in höchstens 10%, vorzugsweise in höchstens 8%, besonders bevorzugt in höchstens 6%, aller Einheiten der Formel (I) den Wert 0 besitzt und
b in 50 bis 95%, vorzugsweise in 60 bis 95%, besonders bevorzugt in 70 bis 95%, aller Einheiten der Formel (I) den Wert 0 besitzt.

Beispiele für einwertige Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie Tolylreste, Xylylreste und Ethylphenylreste, Arylalkylreste, wie der Benzylrest und der β-Phenylethylrest und Alkenylreste, wie der Vinyl-, Allyl und der Cyclohexenylethylrest.

Beispiele für zweiwertige Kohlenwasserstoffreste R sind Alkylenreste, wie der Ethylenrest, oder Ethenylenrest oder der Phenylenrest, die zwei Einheiten der Formel (I) bzw. der Formel (II) miteinander verbinden können.

Beispiele für substituierte Kohlenwasserstoffreste R sind 3-Methacryloxypropyl-, Methacryloxymethyl-, 2-imino-3-carbonyl-4-oxapentyl- oder 4-imino-5-carbonyl-6-oxaheptylrest.

Bevorzugt handelt es sich bei den Resten R um gegebenenfalls mit Heteroatomen substituierte, säurestabile Kohlenwasserstoffreste mit 1 bis 18 Kohlenstoffatomen, besonders bevorzugt um Kohlenwasserstoffreste mit 1 bis 18 Kohlenstoffatomen, insbesondere um den Methyl-, Vinyl-, Propyl-, 2,2,4-Trimethylpentyl-oder den Phenylrest.

Bevorzugt handelt es sich bei den Resten R¹ um Methyl- oder Ethylrest.

Bei den erfindungsgemäß eingesetzten Alkoxysilanen handelt es sich bevorzugt um solche der Formel

RₙSi(OR¹)₄₋ₙ (II),

wobei
R und R¹ die obengenannte Bedeutung haben und
n 0 oder 1, bevorzugt 1, ist.

Beispiele für erfindungsgemäß eingesetzte Alkoxysilane der Formel (II) sind Methyltrimethoxysilan, Methyltriethoxysilan, Phenyltrimethoxysilan, Phenyltriethoxysilan, Vinyltrimethoxysilan, Vinyltriethoxysilan, 2,2,4-Trimethylpentyltrimethoxysilan, 2,2,4-Trimethylpentyltriethoxysilan, n-Propyltrimethoxysilan, n-Propyltriethoxysilan, n-Hexadecyltrimethoxysilan, Bis(triethoxysilyl)ethan, Tetramethoxysilan, Tetraethoxysilan und 3-(Methacryloxypropyl)trimethoxysilan, Methacryloxymethyltrimethoxysilan, N-[3-(Trimethoxysilyl)propyl]-O-methylcarbamat, und N-Trimethoxysilylmethyl-O-methylcarbamat, wobei Methyltrimethoxysilan, Methyltriethoxysilan, Phenyltrimethoxysilan, Phenyltriethoxysilan, Vinyltrimethoxysilan, Vinyltriethoxysilan, n-Propyltrimethoxysilan, n-Propyltriethoxysilan, 2,2,4-Trimethylpentyltrimethoxysilan oder 2,2,4-Trimethylpentyltriethoxysilan bevorzugt sind.

Im ersten Schritt des erfindungsgemäßen Verfahrens können die Silane der Formel (II) sowohl als reine Silane als auch als Gemisch verschiedener Silane der Formel (II) eingesetzt werden.

Bei den erfindungsgemäß eingesetzten Polydiorganosiloxanen handelt es sich bevorzugt um lineare oder cyclische Siloxane bestehend aus Einheiten der Formel

R_{c}(OR²)_{d}SiO_{4-c-d/2} (III),

wobei
R die obengenannte Bedeutung hat,
R² gleich oder verschieden sein kann und Wasserstoffatom oder einen Kohlenwasserstoffrest mit 1 bis 4 Kohlenstoffatomen bedeutet,
c gleich 2 oder 3 ist und
d gleich 0 oder 1 bedeutet,
mit der Maßgabe, dass die Summe c+d≤3 ist und c in mindestens 50%, vorzugsweise in mindestens 70%, besonders bevorzugt in mindestens 90%, aller Einheiten der Formel (I) den Wert 2 besitzt.

Bevorzugt handelt es sich bei den Resten R² um Wasserstoffatom.

Beispiele für erfindungsgemäß eingesetzte Polydiorganosiloxane sind (HO) Me₂SiO[SiMe₂O]₁₀₋₁₀₀₀SiMe₂(OH), Me₃SiO[SiMe₂O]₀₋₁₀₀₀SiMe₃, Me₃SiO[SiMe₂O]₃₋₁₀₀₀SiMe₂(OH), ViMe₂SiO[SiMe₂O]₃₀₋₁₀₀₀SiMe₂Vi, Me₃SiO[SiPhMeO]₁₋₁₀₀[SiMe₂O]₀₋₅₀₀SiMe₃, Me₃SiO[SiPh₂O]₁₋₁₀₀[SiMe₂O]₀₋₅₀₀SiMe₃, Me₃SiO[SiViMeO]₁₋₁₀₀[SiMe₂O]₀₋₅₀₀SiMe₃, cyclo-[SiMe₂O]₃₋₂₀, cyclo-[SiPh₂O]₃₋₁₀, cyclo-[SiViMeO]₃₋₁₀ und deren Gemische, wobei (HO)Me₂SiO[SiMe₂O]₁₀₋₁₀₀₀SiMe₂(OH), Me₃SiO[SiMe₂O]₀₋₁₀₀₀SiMe₃, Me₃SiO[SiMe₂O]₃₋₁₀₀₀SiMe₂(OH), cyclo-[SiMe₂O]₃₋₂₀ oder deren Gemische bevorzugt sind mit Me gleich Methylrest, Vi gleich Vinylrest und Ph gleich Phenylrest.

In allen Formeln der vorliegenden Erfindungsmeldung weisen die Symbole ihre Bedeutungen unabhängig voneinander auf. Das Siliziumatom ist stets vierwertig.

Die Mengenverhältnisse und die Art der beim erfindungsgemäßen Verfahren eingesetzten Silane der Formel (II) und Siloxanen aus Einheiten der Formel (III) richten sich in erster Linie nach dem gewünschten Anteil an Verzweigungen bzw. Kettenlänge des Zielprodukts.

Bei dem erfindungsgemäßen Verfahren werden vorzugsweise 9 bis 0,4 Mol, bevorzugt 9 bis 1 Mol, besonders bevorzugt 9 bis 1,5 Mol, Silane der Formel (II) pro Mol Siliziumatome in den Organopolysiloxanen aus Einheiten der Formel (III) eingesetzt.

Bei der erfindungsgemäß durchgeführten Equilibrierung können alle bekannten, die Equilibrierungsreaktionen fördernden basischen Katalysatoren eingesetzt werden.

Beispiele für basische Equilibrierungskatalysatoren sind Alkalihydroxide, wie Lithiumhydroxid, Natriumhydroxid und Kaliumhydroxid, Alkalialkoxide, wie Natriummethoxid und Natriumethoxid, Alkalikarbonate wie Natriumcarbonat, Kaliumcarbonat und Caesiumcarbonat, Alkaliorganische Verbindungen, wie Butyllithium, Erdalkalihydroxide, wie Calciumhydroxid oder Bariumhydroxid, Phosphoniumhydroxide, wie Tetrabutylphosphoniumhydroxid, Ammoniumhydroxide, wie Benzyltrimethylammoniumhydroxid und Tetramethylammoniumhydroxid, Silanolate, wie Dikalium-polydimethylsiloxanolat, Bis-(Tetramethylammonium)-polydimethylsiloxa-nolat und Bis-(Tetrabutylphosphonium)-polydimethylsiloxanolat und Alkaliverbindungen, die unter den Einsatzbedingungen Alkalihydroxide oder -silanolate bilden können, wie Alkalimetalle, Alkalihydride, Alkalioxide, Alkaliperoxide oder Alkaliamide, wobei Alkalihydroxide, wie Kaliumhydroxid, Alkalialkoxide, wie Natriummethoxid und Natriumethoxid, Alkalikarbonate, wie Caesiumcarbonat, sowie Ammoniumhydroxide, wie Benzyltrimethylammoniumhydroxid und Tetramethylammoniumhydroxid, bevorzugt sind.

Bevorzugt werden bei dem erfindungsgemäßen Verfahren basische Katalysatoren in Mengen von 50 bis 5 000 Gew.-ppm, besonders bevorzugt 100 bis 2 500 Gew.-ppm, jeweils bezogen auf das Gesamtgewicht an Silanen der Formel (II) und Organopolysiloxanen aus Einheiten der Formel (III), eingesetzt.

Als Alkohole, die im erfindungsgemäßen Verfahren gegebenenfalls eingesetzt werden können, werden vorzugsweise solche Kohlenwasserstoffverbindungen mit einer alkoholischen Hydroxylgruppe eingesetzt, die zur Herstellung von Alkoxysilanen bzw. zur Herstellung von Organopolysiloxanen durch Umsetzung von Chlorsilan mit Alkoholen und ggf. Wasser verwendet werden können und deren Siedepunkte unter dem des jeweils herzustellenden Alkoxysilans bzw. Organopolysiloxans liegt.

Bevorzugt handelt es sich bei den im erfindungsgemäßen Verfahren gegebenenfalls eingesetzten Alkoholen um Alkanole mit 1 bis 6 Kohlenstoffatomen oder durch Ethersauerstoff substituierte Alkanole mit 1 bis 6 Kohlenstoffatomen, wie Methanol, Ethanol, n- oder iso-Propanol, beta-Methoxyethanol, n-Butanol oder n-Hexanol, wobei Methanol, Ethanol, iso-Propanol oder Butanol besonders bevorzugt sind, insbesondere Methanol oder Ethanol, wobei im Ethanol übliche Vergällungsmittel, wie Methylethylketon, Petrolether oder Cyclohexan, enthalten sein können. Es können auch Gemische verschiedener Alkohole eingesetzt werden, die ggf. in einer kurzen Mischstrecke vor der Einspeisung in die jeweilige Reaktionseinheit homogenisiert werden können.

Im ersten Schritt des erfindungsgemäßen Verfahrens wird Alkohol in Mengen von vorzugsweise 0 bis 20 Gew.-%, besonders bevorzugt 0 bis 10 Gew.-%, insbesondere 0 bis 5 Gew.-%, jeweils bezogen auf das Gesamtgewicht an Silanen der Formel (II) und Organopolysiloxanen aus Einheiten der Formel (III) eingesetzt. Falls Alkohol im ersten Verfahrensschritt eingesetzt wird, dann bevorzugt als Lösungsmittel für den basischen Katalysator und/oder Verunreinigung der verwendeten Silane.

Beim ersten Schritt des erfindungsgemäßen Verfahrens werden außer Alkoxysilan, Polydiorganosiloxan, basischem Katalysator und gegebenenfalls Alkohol sowie deren Verunreinigungen bevorzugt keine weiteren Komponenten zugesetzt.

Bei den Verunreinigungen, die in den erfindungsgemäß im ersten Verfahrensschritt eingesetzten Komponenten enthalten sein können, handelt es sich beispielsweise um Vergällungsmittel, wie die oben genannten, oder um Chlorkohlenwasserstoffe. Typische Mengen solcher Verunreinigungen sind im Bereich von 1 bis 10 000 Gew.-ppm, bezogen auf die Reaktionsmischung im ersten Verfahrensschritt.

Der erste Schritt des erfindungsgemäßen Verfahrens wird vorzugsweise bei einer Temperatur von 10 bis 150°C, besonders bevorzugt bei 20 bis 145°C, insbesondere bei 30 bis 90°C, und bei einem Druck der umgebenden Atmosphäre, also etwa zwischen 900 und 1100 hPa, durchgeführt. Falls erwünscht, können aber auch höhere oder niedrigere Drücke angewendet werden.

Der erste Schritt des erfindungsgemäßen Verfahrens wird vorzugsweise für die Dauer von 5 bis 120 min, besonders bevorzugt von 10 bis 100 min, insbesondere von 15 bis 90 min, durchgeführt. Die Dauer hängt vom eingesetzten Katalysator, der Katalysatormenge, der Reaktionstemperatur und dem gewünschten Equilibrierungsgrad ab und kann je nach Verfahrensweise angepasst werden. Bei kontinuierlicher Herstellung sind kürzere Zeiten sinnvoll, bei der diskontinuierlichen Herstellung längere Zeiten für die bessere Reproduzierbarkeit.

Nach erfolgter Equilibrierung wird das Reaktionsgemisch vorzugsweise sofort in einem zweiten Schritt weiterverarbeitet. Das Reaktionsgemisch kann aber auch mittels einer Säure neutralisiert, vorzugsweise auf einen Basen- oder Säuregehalt von unter 50 Gew.-ppm, gegebenenfalls entflüchtigt und/oder filtriert in diesem Zustand zwischengelagert werden und anschließend nach einer gewünschten Zeitspanne der zweite Verfahrensschritt durchgeführt werden.

Bei der gegebenenfalls durchgeführten Entflüchtigung wird die erhaltene Reaktionsmischung von flüchtigen Bestandteilen, wie Alkoholen und Silanen befreit, indem das Gemisch bei Temperaturen von bevorzugt 50 bis 200°C und einem Druck von bevorzugt 10 bis 1100 hPa, gehalten wird. Die so abgetrennten flüchtigen Bestandteile können wiederverwendet werden.

Die Viskosität des im ersten Schritt des erfindungsgemäßen Verfahrens erhaltenen isolierten, entflüchtigten Equilibrats beträgt bevorzugt 2 bis 100 mPas, besonders bevorzugt 3 bis 50 mPas, insbesondere 4 bis 25 mPas, jeweils bei 25°C.

Der Gehalt an OR¹-Gruppen der im ersten Schritt des erfindungsgemäßen Verfahrens erhaltenen Equilibrate beträgt mindestens 20 Gew.-%, bevorzugt mindestens 22 Gew.-%, insbesondere mindestens 25 Gew.-%, wobei R¹ eine der oben genannten Bedeutungen hat.

Das nach dem ersten Schritt erhaltene Reaktionsgemisch bzw. das isolierte Equilibrat wird in einem anschließenden zweiten Schritt durch Zugabe eines sauren Katalysators sauer eingestellt und mit Wasser sowie gegebenenfalls weiteren alkoxyund/oder hydroxyfunktionellen Organosiliciumverbindungen gegebenenfalls in Anwesenheit von Alkohol umgesetzt.

Beispiele für die erfindungsgemäß eingesetzten sauren Katalysatoren sind anorganische Säuren, wie Salzsäure, Flusssäure, Schwefelsäure, Salpetersäure, Perchlorsäure oder Phosphorsäure, Sulfonsäuren, wie Trifluormethansulfonsäure, Fluorsulfonsäure oder Methylsulfonsäure, Phosphonsäuren, wie Vinylphosphonsäure oder n-Octylphosphonsäure, organische Säuren, wie Trifluoressigsäure, Ameisensäure, Oxalsäure oder n-Octylsäure, sowie Verbindungen, die unter den Einsatzbedingungen, also in Anwesenheit von Wasser und Alkoholen, Säuren bilden können, wie Chloride, wie z.B. Isooctyltrichlorsilan, Dichlordimethylsilan, Tetrachlorsilan, Phosphoroxychlorid, Essigsäurechlorid, n-Octylsäurechlorid oder Bortrichlorid, Fluoride, wie Bortrifluorid-Komplexe, Nichtmetalloxide, wie Schwefeltrioxid und Anhydride, wie Essigsäureanhydrid, Dischwefelsäure und Diphosphorsäure, wobei Salzsäure, Schwefelsäure, Salpetersäure oder Methylsulfonsäure besonders bevorzugt sind.

Die erfindungsgemäß eingesetzten sauren Katalysatoren werden in einer Menge eingesetzt, so dass nach dem Neutralisieren des basischen Katalysators ein Überschuss des sauren Katalysators in Mengen von 50 bis 5 000 Gew.-ppm, besonders bevorzugt 100 bis 2 500 Gew.-ppm, jeweils bezogen auf das Gesamtgewicht des eingesetzten Equilibrats, resultiert.

Bevorzugt handelt es sich beim im zweiten Schritt des erfindungsgemäßen Verfahrens verwendeten Wasser um teilentsalztes Wasser, vollentsalztes Wasser, destilliertes oder (mehrfach) redestilliertes Wasser oder Wässer für medizinische oder pharmazeutische Zwecke, besonders bevorzugt um teilentsalztes Wasser oder vollentsalztes Wasser.

Bevorzugt hat das erfindungsgemäß eingesetzte Wasser eine Leitfähigkeit bei 25°C und 1010 hPa von höchstens 50 µS/cm. Bevorzugt ist das erfindungsgemäß eingesetzte Wasser luftgesättigt, klar und farblos.

Bei dem erfindungsgemäßen Verfahren wird im zweiten Schritt Wasser in Mengen von bevorzugt 0,3 mol bis 0,6 mol, bezogen auf 1 mol Alkoxygruppen der eingesetzten Alkoxysilane der Formel (II), eingesetzt.

Bevorzugt wird das Wasser komplett am Anfang des zweiten Schritts zugegeben, bevorzugt nach der Zugabe des sauren Katalysators. Das Wasser kann auch als Gemisch mit dem sauren Katalysator zugegeben werden. Die Wasserzugabe erfolgt bevorzugt schrittweise oder kontinuierlich im Verlauf von 1 bis 15 min unter intensivem Rühren, so dass zunächst das Wasser fein verteilt wird und dadurch die Alkoxygruppen hydrolysieren, und dann im weiteren Verlauf der sich bildende Alkohol für eine homogene Verteilung des zugeführten Wassers sorgt, sowie die Reaktionswärme zum Beispiel durch Rückflusskühlung abgeführt werden kann.

Beispiele für die im zweiten Schritt des erfindungsgemäßen Verfahrens gegebenenfalls eingesetzten Alkohole sind die für die Alkohole, die im ersten Schritt eingesetzt werden können, genannten Beispiele.

Falls in beiden Schritten des erfindungsgemäßen Verfahrens Alkohol eingesetzt wird, handelt es sich bevorzugt in allen Schritten um denselben Alkohol, bevorzugt um Methanol oder Ethanol. Bevorzugt wird Alkohol nur im ersten Schritt als Lösungsmittel für den basischen Katalysator eingesetzt. Im zweiten Schritt entsteht Alkohol bei der Hydrolyse der Alkoxygruppen, und es wird bevorzugt kein zusätzlicher Alkohol zugegeben. Falls im ersten und/oder zweiten Schritt des erfindungsgemäßen Verfahrens Alkohol eingesetzt wird, handelt es sich bevorzugt um den gleichen, der bei der Hydrolyse im zweiten Schritt entsteht.

Im zweiten Schritt des erfindungsgemäßen Verfahrens werden bevorzugt keine Kohlenwasserstoffe eingesetzt.

Zur besseren Einmischung kann das Wasser mit Alkohol gemischt werden, bevorzugt wird der Alkohol eingesetzt, der bei der Hydrolyse entsteht, und/oder die Reaktionsmischung auf Temperaturen von 1 bis 20 °C unter dem Siedepunkt des entstehenden Alkohols erwärmt werden. Am Anfang der Wasserzugabe kann das Reaktionsgemisch 2-phasig, also trüb, sein. Im weiteren Verlauf der Wasserzugabe und der sauren Kondensation im zweiten Schritt ist die Reaktionsmischung 1-phasig, also homogen. Bei sehr hohen Kondensationsgraden kann das Gemisch wieder trüb werden, durch Ausfällung von hochkondensierten Siliconharzen aus der alkoholischen Lösung, was jedoch nicht bevorzugt ist.

Beim zweiten Schritt des erfindungsgemäßen Verfahrens werden außer Equilibrat, Wasser, gegebenenfalls weitere Organosiliciumverbindungen, saurem Katalysator und gegebenenfalls Alkohol bevorzugt keine weiteren Komponenten zugesetzt.

In einer bevorzugten Ausführungsform des erfindungsgemäßen Verfahrens (Verfahrensvariante a) werden im zweiten Reaktionsschritt keine weiteren Organosiliciumverbindungen eingesetzt, und die Umsetzung erfolgt mit Wasser zur gewünschten Kondensationsstufe, wodurch bevorzugt hoch kondensierte, verzweigte Organopolysiloxane als Endprodukt entstehen.

In einer weiteren bevorzugten Ausführungsform des erfindungsgemäßen Verfahrens (Verfahrensvariante b) werden im zweiten Schritt weitere Organosiliciumverbindungen eingesetzt, die dann mit Wasser und dem Equilibrat reagieren.

Bei den in der erfindungsgemäßen Verfahrensvariante b eingesetzten Organosiliciumverbindungen kann es sich um Silane der Formel (II) und/oder Siloxane aus Einheiten der Formel (III) handeln, wobei es sich dabei bevorzugt um kurzkettige Organopolysiloxane mit höchstens 10 Einheiten der Formel (III), besonders bevorzugt um Hexamethyldisiloxan, handelt.

Die in der erfindungsgemäßen Verfahrensvariante b eingesetzten Organosiliciumverbindungen werden vorzugsweise in Mengen von 1 bis 10 Gew.-%, besonders bevorzugt von 1 bis 7 Gew.-%, jeweils bezogen auf das Gesamtgewicht des eingesetzten Equilibrats, verwendet.

Bei einer bevorzugten Verfahrensvariante wird der zweite Schritt bevorzugt direkt im Anschluss an den ersten Schritt und im selben Gefäß wie der erste Schritt durchgeführt.

In einer weiteren bevorzugten Verfahrensvariante wird der zweite Schritt absatzweise in einem anderen, separaten Gefäß als der erste Verfahrensschritt durchgeführt.

In einer weiteren bevorzugten Verfahrensvariante wird der zweite Schritt in einem anderen, separaten Gefäß als der erste Verfahrensschritt durchgeführt, wobei das im ersten Schritt erhaltene, gegebenenfalls neutralisierte Equilibrat, Wasser, saurer Katalysator, gegebenenfalls weitere Organosiliciumverbindungen und gegebenenfalls Alkohol kontinuierlich zugeführt und das Reaktionsprodukt kontinuierlich abgeführt wird.

In einer weiteren bevorzugten Verfahrensvariante wird der erste Verfahrensschritt und der zweite Schritt kontinuierlich durchgeführt, wobei beide Schritte in gemischten oder durchströmten Behälter durchgeführt werden, die direkt miteinander verbunden oder mit einem Zwischenbehälter getrennt sein können.

Der zweite Schritt des erfindungsgemäßen Verfahrens wird vorzugsweise bei einer Temperatur von 10 bis 150°C, besonders bevorzugt bei 20 bis 145°C, insbesondere bei 30 bis 90°C, und bei einem Druck der umgebenden Atmosphäre, also etwa zwischen 900 und 1100 hPa, durchgeführt. Falls erwünscht, können aber auch höhere oder niedrigere Drücke angewendet werden. Die absatzweise Verfahrensvariante wird vorzugsweise unter Rückfluss und bei einem Druck der umgebenden Atmosphäre durchgeführt. Die kontinuierliche Verfahrensvariante wird bevorzugt in einem Gefäß mit Rückflusskühler vorzugsweise unter Rückfluss und bei einem Druck der umgebenden Atmosphäre oder in einem geschlossenen Gefäß ohne Rückflusskühler vorzugsweise bei Temperaturen von 5 bis 10°C unter der Rückflusstemperatur und bei einem leichten Überdruck durchgeführt.

Der zweite Schritt des erfindungsgemäßen Verfahrens wird vorzugsweise für die Dauer von 5 bis 250 min, besonders bevorzugt von 10 bis 200 min, insbesondere von 15 bis 180 min, durchgeführt. Die Dauer hängt vom eingesetzten Katalysator, der Katalysatormenge, der Wassermenge, der Reaktionstemperatur und dem gewünschten Kondensationsgrad ab und kann je nach Verfahrensweise angepasst werden, bei der kontinuierlichen Verfahrensvariante sind kürzere Zeiten sinnvoll, bei der absatzweisen Verfahrensvariante längere Zeiten für die bessere Reproduzierbarkeit.

Im Anschluss an die erfindungsgemäße Umsetzung kann eine Aufarbeitung bzw. Reinigung des erhaltenen Reaktionsgemischs beispielsweise durch Deaktivierung und Entflüchtigung erfolgen.

Die Deaktivierung erfolgt bevorzugt mit einem Unterschuss an basischem Katalysator, so dass ein HCl-Gehalt der Mischung von 0 bis 20 ppm erhalten wird. Beispiele sind die für den basischen Equilibrierkatalysator genannten, insbesondere Natriummethoxid und Natriumethoxid.

Optional können vor oder während der Entflüchtigung weitere Stoffe zugegeben werden, die mit den nach dem erfindungsgemäßen Verfahren hergestellten verzweigten Organopolysiloxanen vermischt werden sollen, wie z.B. Siliconfestharze, Acrylatmonomere oder Methacrylatmonomere.

Bei der Entflüchtigung wird das erhaltene Reaktionsgemisch von flüchtigen Bestandteilen, wie Alkoholen und Wasserresten, befreit, indem das Gemisch bei Temperaturen von bevorzugt 30 bis 120 °C und einem Absolutdruck von bevorzugt 20 bis 800 mbar, gehalten wird. Bevorzugt wird zunächst bei Normaldruck und einer Temperatur im Bereich von 80 bis 120°C die Hauptmenge Alkohol abdestilliert und anschließend restliche flüchtige Bestandteile bei einem Druck von 20 bis 800 mbar entfernt.

Der Alkohol, der bei der Aufarbeitung abgetrennt wird, kann wiederverwendet werden, z.B. bei der Herstellung von Alkoxysilanen.

Ein großer Vorteil des erfindungsgemäßen Verfahrens ist, dass die Hydrolyse und Kondensation im zweiten Schritt ohne Zusatz von Kohlenwasserstoffen und nur in Anwesenheit des als Reaktionsprodukt entstehenden Alkohols erfolgt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren kann absatzweise, halbkontinuierlich oder vollkontinuierlich durchgeführt werden.

Die nach dem erfindungsgemäßen Verfahren hergestellten verzweigten Organopolysiloxane enthaltend Einheiten der Formel (I) besitzen mittlere Molekulargewichte Mw (Gewichtsmittel) von vorzugsweise 800 bis 10 000 g/mol mit einer Polydispersität (PD) von höchstens 10, bevorzugt 900 bis 8 000 g/mol mit einer Polydispersität von höchstens 5, besonders bevorzugt 1 000 bis 5 000 g/mol mit einer Polydispersität von höchstens 4, insbesondere 1 000 bis 3 000 g/mol mit einer Polydispersität von höchstens 3,0.

Das Gewichtsmittel Mw der erfindungsgemäß hergestellten Endprodukte enthaltend Einheiten der Formel (I) beträgt vorzugsweise mindestens das 1,1-fache des Gewichtsmittels Mw des nach dem ersten Schritt erhaltenen Equilibrats, bevorzugt mindestens das 1,2-fache, besonders bevorzugt mindestens das 1,3-fache, insbesondere mindestens das 1,4-fache.

Da die erfindungsgemäß hergestellten Endprodukte sowohl flüssig als auch hochviskos oder fest sein können, können sie einen sehr großen Viskositätsbereich überstreichen. Bevorzugt handelt es sich um bei 20°C und 1013 hPa flüssige Organopolysiloxane, mit einer Viskosität von vorzugsweise 600 bis 100 000 mPas, bevorzugt von 750 bis 50 000 mPas und besonders bevorzugt von 1000 bis 10 000 mPas, jeweils bei 25°C und Normdruck.

Die nach dem erfindungsgemäßen Verfahren hergestellten verzweigten Organopolysiloxane enthaltend Einheiten der Formel (I) besitzen einen Alkoxygehalt von vorzugsweise 2 bis 20 Gew.-%, besonders bevorzugt von 3 bis 18 Gew.-%, insbesondere von 4 bis 15 Gew.-%.

Die erfindungsgemäß hergestellten Equilibrate oder die Endprodukte bzw. deren Zubereitungen können zur Herstellung von Kompositen für den Innen- und Außenbereich als Bindemittel oder als Bindemittelzusatz verwendet werden.

Die nach dem erfindungsgemäßen Verfahren hergestellten verzweigten Organopolysiloxane enthaltend Einheiten der Formel (I) können auch zur Manipulation von weiteren Eigenschaften von Zubereitungen oder von daraus erhältlichen Festkörpern oder Filmen eingesetzt werden:
- Steuerung der elektrischen Leitfähigkeit und des elektrischen Widerstandes
- Steuerung der Verlaufseigenschaften einer Zubereitung
- Steuerung des Glanzes eines feuchten oder gehärteten Filmes oder eines Objektes
- Erhöhung der Bewitterungsbeständigkeit
- Erhöhung der Chemikalienresistenz
- Erhöhung der Farbtonstabilität
- Reduzierung der Kreidungsneigung
- Reduzierung oder Erhöhung der Haft- und Gleitreibung auf Festkörpern oder Filmen
- Stabilisierung oder Destabilisierung von Schaum in der Zubereitung
- Verbesserung der Haftung der Zubereitung und Steuerung des Füllstoff- und Pigmentnetz- und -dispergierverhaltens,
- Steuerung der rheologischen Eigenschaften der Zubereitung,
- Steuerung der mechanischen Eigenschaften, wie z.B. Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen, Ausdehnungskoeffizient, Abriebfestigkeit sowie weiterer Eigenschaften wie der Wärmeleitfähigkeit, Brennbarkeit, Gasdurchlässigkeit, Beständigkeit gegen Wasserdampf, Heißluft, Chemikalien, Bewitterung und Strahlung, der Sterilisierbarkeit von Festkörpern oder Filmen, Steuerung der elektrischen Eigenschaften, wie z.B. dielektrischer Verlustfaktor, Durchschlagfestigkeit, Dielektrizitätskonstante, Kriechstromfestigkeit, Lichtbogenbeständigkeit, Oberflächenwiderstand, spezifischer Durchschlagswiderstand,
- Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen von Festkörpern oder Filmen.

Beispiele für Anwendungen, in denen die mit dem erfindungsgemäßen Verfahren hergestellten Equilibrate oder Endprodukte eingesetzt werden können, um die oben bezeichneten Eigenschaften zu manipulieren, sind die Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien sowie Formteilen. Die Equilibrate oder Endprodukte können in Zubereitungen bei entsprechender Auswahl der Zubereitungskomponenten außerdem als Additiv zum Zwecke der Entschäumung, der Verlaufsförderung, Hydrophobierung, Hydrophilierung, Füllstoff- und Pigmentdispergierung, Füllstoff- und Pigmentbenetzung, Substratbenetzung, Förderung der Oberflächenglätte, Reduzierung des Haft- und Gleitwiderstandes auf der Oberfläche der aus der additivierten Zubereitung erhältlichen ausgehärteten Masse eingesetzt werden.

Das erfindungsgemäße Verfahren hat den Vorteil, dass es sehr einfach in der Durchführung ist und ein sehr hoher Umsatz erzielt wird.

Das erfindungsgemäße Verfahren hat den Vorteil, dass verzweigte Polyorganosiloxane konstanter Zusammensetzung reproduzierbar hergestellt werden können.

Das erfindungsgemäße Verfahren hat den Vorteil, dass es gänzlich ohne die Verwendung von Kohlenwasserstoffen auskommt.

Ferner hat das erfindungsgemäße Verfahren den Vorteil, dass keine Abwasserphase erzeugt wird, wie dies z.B. bei 2-phasigen Verfahren der Fall ist.

Das erfindungsgemäße Verfahren gestattet im ersten Verfahrensschritt den Equilibriergrad gezielt von hoch bis niedrig einzustellen, so dass es geeignet ist, 1-phasige Polyorganosiloxane bereitzustellen.

Das erfindungsgemäße Verfahren gestattet im zweiten Verfahrensschritt die Alkoxygehalte der Equilibrate gezielt von hoch bis niedrig einzustellen, so dass es geeignet ist, sowohl niedermolekulare als auch hochmolekulare Polyorganosiloxane bereitzustellen.

Das erfindungsgemäße Verfahren hat den Vorteil, dass es eine Rückgewinnungsrate für den freiwerdenden Alkohol von mindestens 95% besitzt.

Des Weiteren hat das erfindungsgemäße Verfahren den Vorteil, dass es besonders geeignet ist für die kontrollierte Herstellung von sogenannten DT, MDT, DQ, MDQ, DTQ und MDTQ-Harzen.

Im vorliegenden Text werden Stoffe durch Angabe von Daten charakterisiert, die mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier angegeben:

### Viskosität:

Die Viskositäten werden, wenn nicht anders angegeben, durch rotationsviskosimetrische Messung gemäß DIN EN ISO 3219 bestimmt. Falls nicht anders angegeben, gelten alle Viskositätsangaben bei 25°C und Normaldruck von 1013 mbar.

### Molekülzusammensetzungen:

Die Molekülzusammensetzungen werden mittels Kernresonanzspektroskopie bestimmt (zu Begrifflichkeiten siehe ASTM E 386: Hochauflösende magnetische Kernresonanzspektroskopie (¹H-NMR): Begriffe und Symbole), wobei der ¹H-Kern und der ²⁹Si-Kern vermessen wird.

### Beschreibung ¹H-NMR Messung

Solvent: CDCl₃, 99,8%d
Probenkonzentration: ca. 50 mg / 1 ml CDCl₃ in 5 mm NMR-Röhrchen
Messung ohne Zugabe von TMS, Spektrenreferenzierung von Rest-CHCl₃ in CDCl₃ auf 7,24 ppm
Spektrometer: Bruker Avance I 500 oder Bruker Avance HD 500
Probenkopf: 5 mm BBO-Probenkopf oder SMART-Probenkopf (Fa. Bruker)
Messparameter:
   Pulprog = zg30
   TD = 64k
   NS = 64 bzw. 128 (abhängig von der Empfindlichkeit des Probenkopfes)
   SW = 20,6 ppm
   AQ = 3,17 s
   D1 = 5 s
   SFO1 = 500,13 MHz
   O1 = 6,175 ppm
Processing-Parameter:
   SI = 32k
   WDW = EM
   LB = 0,3 Hz

Je nach verwendetem Spektrometertyp sind evtl. individuelle Anpassungen der Messparameter erforderlich.

### Beschreibung ²⁹Si-NMR Messung

Solvent: C₆D₆ 99,8%d/CCl₄ 1:1 v/v mit 1Gew% Cr(acac)3 als Relaxationsreagenz
Probenkonzentration: ca. 2 g / 1,5 ml Solvent in 10 mm NMR-Röhrchen
Spektrometer: Bruker Avance 300 Probenkopf: 10 mm 1H/13C/15N/29Si glasfreier QNP-Probenkopf (Fa. Bruker)
Messparameter:
   Pulprog = zgig60
   TD = 64k
   NS = 1024 (abhängig von der Empfindlichkeit des Probenkopfes)
   SW = 200 ppm
   AQ = 2,75 s
   D1 = 4 s
   SFO1 = 300,13 MHz
   O1 = -50 ppm
Processing-Parameter:
   SI = 64k
   WDW = EM
   LB = 0,3 Hz

Je nach verwendetem Spektrometertyp sind evtl. individuelle Anpassungen der Messparameter erforderlich.

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechnungsindexdetektor (RI-Detektor). Wo nicht anders ausgewiesen, wird THF als Eluent verwendet und DIN 55672-1 angewendet. Die Polydispersität (PD) ist der Quotient Mw/Mn.

### Säurezahl (HCl-Gehalt):

10 ml eines mit 0,01n ethanolischer HCl neutralisierten Lösemittelgemisches aus je 3 Liter Toluol und Isopropanol mit 12 ml von 0,024 g Tetrabromphenolphthaleinethylester in Ethanol 96%-ig, werden mit 3,00 g der zu prüfenden Substanz bis zum Umschlag nach blau mit 0,01n ethanolischer KOH titriert.
Ph bedeutet Phenylrest
Me bedeutet Methylrest

### Beispiel 1

In einem 2-1-Glaskolben mit Rückflusskühler, Tropftrichter und KPG-Rührer werden 260 g Methyltrimethoxysilan, 576 g Phenyltriethoxysilan, 72 g dihydroxyterminiertes Polydimethylsiloxan mit einer Viskosität von 80 mPas und 1,0 g (4,6 mmol) Natriummethylatlösung (25 %ig in Methanol) eine Stunde bei 100°C gerührt, dann mit 2,4 g Salzsäure (20 %ig) angesäuert, im Verlauf von 15 Minuten 86 g Wasser zugegeben und drei Stunden am Rückfluss gerührt.

Das so entstandene kondensierte, HCl-saure Endprodukt wird mittels einer Natriummethylatlösung (25 %ig in Methanol) neutralisiert und anschließend filtriert.

Danach wird die alkoholische Endproduktlösung am Rotationsverdampfer bei 100°C Ölbadtemperatur bis zu einem Endvakuum von 50 mbar destilliert, wobei 418 g Destillat anfallen. Man erhält 568 g eines flüssigen und klaren Endproduktes, das durch Viskosität, Restalkoxygehalt sowie Molekulargewichtsverteilung wie folgt definiert ist:
Molekulare Zusammensetzung aus 29Si-NMR:
   Me₂SiO_{2/2}: 19,5 mol-%
   Me₂Si (OR')O_{1/2}: 2,1 mol-%
   MeSi(OR')₂O_{1/2}: 1,1 mol-%,
   MeSi(OR')O_{2/2}: 14,8 mol-%,
   MeSiO_{3/2} + PhSiO_{1/2}: 19,6 mol-%,
   PhSi(OR')O_{2/2}: 30,2 mol-%,
   PhSiO_{3/2}: 12,7 mol-%,
   R' = Et oder OH
Zusammensetzung aus ¹H-NMR:
   Ethoxygehalt: 16,4 Gew.-%,
   Silanolgehalt: 0,8 Gew.-%,
   Gehalt PhSiO_{3/2}: 53,7 Gew.-%,
   Gehalt MeSiO_{3/2}: 16,0 Gew.-%,
   Gehalt Me₂SiO_{2/2}: 13,1 Gew.-%,

| | |
|---|---|
| Viskosität: | 310 mm²/s |
| Mw: | 8200 g/mol |
| Mn: | 1900 g/mol |
| PD: | 4,3. |

### Beispiel 2

In einem 2-1-Glaskolben mit Rückflusskühler, Tropftrichter und KPG-Rührer werden 260 g Methyltrimethoxysilan, 576 g Phenyltriethoxysilan, 72 g dihydroxyterminiertes Polydimethylsiloxan mit einer Viskosität von 80 mPas und 1,0 g (4,6 mmol) Natriummethylatlösung (25 %ig in Methanol) eine Stunde bei 100°C gerührt, dann mit 2,4 g Salzsäure (20%ig) angesäuert, im Verlauf von 15 Minuten 95 g Wasser zugegeben und eine Stunde am Rückfluss gerührt.

Das so entstandene kondensierte, HCl-saure Endprodukt wird mittels einer Natriummethylatlösung (25 %ig in Methanol) neutralisiert und anschließend filtriert.

Danach wird die alkoholische Endproduktlösung mit 200 g eines Phenylfestharzes, käuflich erhältlich bei der WACKER Chemie AG unter der Bezeichnung SILRES® 604, versetzt, destilliert, und man erhält ein flüssiges und klares Endprodukt, das durch Viskosität, Restalkoxygehalt sowie Molekulargewichtsverteilung wie folgt definiert ist:
Molekulare Zusammensetzung aus 29Si-NMR:
Me₂SiO_{2/2}: 14,4 mol-%
Me₂Si(OEt)O_{1/2}: 1,4 mol-%
MeSi(OEt)₂O_{1/2}: 0,8 mol-%,
MeSi(OEt)O_{2/2}: 14,3 mol-%,
MeSiO_{3/2} + PhSiO_{1/2}: 24,2 mol-%,
PhSi (OEt)O_{2/2}: 31,0 mol-%,
PhSiO_{3/2}: 13,9 mol-%,

Zusammensetzung aus ¹H-NMR:
Ethoxygehalt: 12,1 Gew.-%,
Silanolgehalt: 1,1 Gew.-%,
Gehalt PhSiO_{3/2}: 57,0 Gew.-%,
Gehalt MeSiO_{3/2}: 19,5 Gew.-%,
Gehalt Me₂SiO_{2/2}: 10,3 Gew.-%,

weitere Produktparameter:

| | |
|---|---|
| Viskosität: | 8930 mm²/s |
| Mw: | 1660 g/mol |
| Mn: | 1020 g/mol |
| PD: | 1, 6. |

### Vergleichsbeispiel 1

In einem 2-1-Glaskolben mit Rückflusskühler, Tropftrichter und KPG-Rührer werden 260 g Methyltrimethoxysilan, 576 g Phenyltriethoxysilan, 72 g dihydroxyterminiertes Polydimethylsiloxan mit einer Viskosität von 80 mPas und 1,6 g (8,7 mmol) Salzsäure (20 %ig) eine Stunde bei 100°C gerührt, dann im Verlauf von 15 Minuten 86 g Wasser zugegeben und drei Stunden am Rückfluss gerührt.

Das so entstandene kondensierte, HCl-saure Endprodukt wird mittels einer Natriummethylatlösung (25 %ig in Methanol) neutralisiert und anschließend filtriert.

Danach wird die alkoholische Endproduktlösung destilliert, und man erhält ein flüssiges und trübes Endprodukt, das sich im Verlauf von Tagen in Phasen trennt.

## Patentansprüche

1. Verfahren zur Herstellung von verzweigten Organopolysiloxanen, wobei
in einem ersten Schritt mindestens ein Alkoxysilan mit mindestens einem Polydiorganosiloxan in Gegenwart eines basischen Katalysators gegebenenfalls im Gemisch mit Alkohol equilibriert wird und
in einem zweiten Schritt das im ersten Schritt erhaltene Equilibrat mit Wasser und gegebenenfalls weiteren Organosiliciumverbindungen in Anwesenheit eines sauren Katalysators und gegebenenfalls Alkohol hydrolysiert und kondensiert wird,
mit der Maßgabe, dass im zweiten Schritt Kohlenwasserstoffe in Mengen von maximal 1 Gew.-%, bezogen auf die Menge des Equilibrats, anwesend sind.

2. Verfahren nach Anspruch 1, **dadurch gekennzeichnet, dass** es sich bei den Alkoxysilanen um solche der Formel
RₙSi(OR¹)₄₋ₙ (II)
handelt, wobei
R gleich oder verschieden sein kann und einen einwertigen, SiC-gebundenen, gegebenenfalls substituierten Kohlenwasserstoffrest bedeutet,
R¹ gleich oder verschieden sein kann und Wasserstoffatom oder Kohlenwasserstoffreste mit 1 bis 4 Kohlenstoffatomen bedeutet, und
n 0 oder 1 ist.

3. Verfahren nach Anspruch 1 oder 2, **dadurch gekennzeichnet, dass** es sich bei den Polydiorganosiloxanen um lineare oder cyclische Siloxane bestehend aus Einheiten der Formel
R_{c}(OR²)_{d}SiO_{4-c-d/2} (III)
handelt, wobei
R gleich oder verschieden sein kann und einen einwertigen, SiC-gebundenen, gegebenenfalls substituierten Kohlenwasserstoffrest bedeutet,
R² gleich oder verschieden sein kann und Wasserstoffatom oder einen Kohlenwasserstoffrest mit 1 bis 4 Kohlenstoffatomen bedeutet,
c gleich 2 oder 3 ist und
d gleich 0 oder 1 bedeutet,
mit der Maßgabe, dass die Summe c+d≤3 ist und c in mindestens 50% aller Einheiten der Formel (I) den Wert 2 besitzt.

4. Verfahren nach einem oder mehreren der Ansprüche 2 bis 3, **dadurch gekennzeichnet, dass** im zweiten Schritt Wasser in Mengen von 0,3 mol bis 0,6 mol, bezogen auf 1 mol Alkoxygruppen der eingesetzten Alkoxysilane der Formel (II), eingesetzt wird.

5. Verfahren nach einem oder mehreren der Ansprüche 1 bis 4, **dadurch gekennzeichnet, dass** im zweiten Schritt weitere Organosiliciumverbindungen eingesetzt werden (Verfahrensvariante b).

## Claims

1. Process for producing branched organopolysiloxanes, wherein
in a first step at least one alkoxysilane is equilibrated with at least one polydiorganosiloxane in the presence of a basic catalyst, optionally mixed with alcohol, and in a second step the equilibrate obtained in the first step is hydrolyzed and condensed with water and optionally other organosilicon compounds in the presence of an acidic catalyst and optionally alcohol,
with the proviso that in the second step hydrocarbons are present in amounts of not more than 1% by weight, based on the amount of the equilibrate.

2. Process according to Claim 1, **characterized in that** the alkoxysilanes are those of the formula
RₙSi(OR¹)₄₋ₙ (II)
where
R may be the same or different and is a monovalent, SiC-bonded, optionally substituted hydrocarbon radical, R¹ may be the same or different and is a hydrogen atom or hydrocarbon radicals having 1 to 4 carbon atoms, and
n is 0 or 1.

3. Process according to Claim 1 or 2, **characterized in that** the polydiorganosiloxanes are linear or cyclic siloxanes consisting of units of the formula
R_{c}(OR²)_{d}SiO_{4-c-d/2} (III)
where
R may be the same or different and is a monovalent, SiC-bonded, optionally substituted hydrocarbon radical, R² may be the same or different and is a hydrogen atom or a hydrocarbon radical having 1 to 4 carbon atoms,
c is equal to 2 or 3 and
d means equal to 0 or 1,
with the proviso that the sum of c+d≤3 and c has the value 2 in at least 50% of all units of the formula (I).

4. Process according to one or more of Claims 2 to 3, **characterized in that** in the second step water is used in amounts of 0.3 mol to 0.6 mol, based on 1 mol of alkoxy groups of the alkoxysilanes of the formula (II) used.

5. Process according to one or more of Claims 1 to 4, **characterized in that** further organosilicon compounds are used in the second step (process variant b).

## Revendications

1. Procédé pour la préparation d'organopolysiloxanes ramifiés, dans lequel
dans une première étape, au moins un alcoxysilane est équilibré avec au moins un polydiorganosiloxane en présence d'un catalyseur basique éventuellement en mélange avec un alcool et
dans une deuxième étape, l'équilibrat obtenu dans la première étape est hydrolysé et condensé avec de l'eau et éventuellement d'autres composés d'organosilicium en présence d'un catalyseur acide et éventuellement d'un alcool,
à la condition que dans la deuxième étape, des hydrocarbures soient présents en des quantités de maximum 1 % en poids, par rapport à la quantité de l'équilibrat.

2. Procédé selon la revendication 1, **caractérisé en ce que** les alcoxysilanes sont ceux de formule
RₙSi(OR¹)₄₋ₙ (II),
R pouvant être identique ou différent et signifiant un radical hydrocarboné monovalent, lié par SiC, éventuellement substitué,
R¹ pouvant être identique ou différent et signifiant un atome d'hydrogène ou des radicaux hydrocarbonés comportant 1 à 4 atomes de carbone, et
n étant 0 ou 1.

3. Procédé selon la revendication 1 ou 2, **caractérisé en ce que** les polydiorganosiloxanes sont des siloxanes linéaires ou cycliques constitués de motifs de formule
R_{c}(OR²)_{d}SiO_{4-c-d/2} (III),
R pouvant être identique ou différent et signifiant un radical hydrocarboné monovalent, lié par SiC, éventuellement substitué,
R² pouvant être identique ou différent et signifiant un atome d'hydrogène ou des radicaux hydrocarbonés comportant 1 à 4 atomes de carbone,
c étant égal à 2 ou 3 et
d signifiant égal à 0 ou 1,
à la condition que la somme c + d soit ≤ 3 et c possède la valeur 2 dans au moins 50 % de tous les motifs de formule (I).

4. Procédé selon l'une ou plusieurs des revendications 2 et 3, **caractérisé en ce que** dans la deuxième étape, de l'eau est utilisée en des quantités de 0,3 mole à 0,6 mole, par rapport à 1 mole de groupes alcoxy des alcoxysilanes de formule (II) utilisés.

5. Procédé selon l'une ou plusieurs des revendications 1 à 4, **caractérisé en ce que** dans la deuxième étape d'autres composés d'organosilicium sont utilisés (variante de procédé b).
